# EUROPEAN PATENT SPECIFICATION

(11) **EP 2 679 446 B1**
(45) Date of publication and mention of the grant of the patent: **13.01.2021**
(21) Application number: 13173194.5
(22) Date of filing: 21.06.2013
(51) Int. Cl.: B60Q 1/26, B62D 25/08, B60Q 1/00, B60R 13/00, B60R 13/10

(54) **VEHICLE LAMP TO BODY ASSEMBLY**
MONTAGE VON FAHRZEUGLAMPE AN KAROSSERIE
PHARE DE VÉHICULE POUR ENSEMBLE DE CARROSSERIE

(30) Priority: 26.06.2012 GB 201211285
(43) Date of publication of application: 01.01.2014
(73) Proprietor: Nissan Motor Manufacturing (UK) Ltd., Cranfield Bedfordshire MK43 0DB (GB)
(72) Inventor: Champaneri, Bhavesh, Cranfield, Bedfordshire MK430DB (GB); Clayton, Bill, Cranfield, Bedfordshire MK430DB (GB)

(56) References cited:
- FR-A1- 2 959 284
- JP-A- 2000 251 509
- JP-A- 2004 306 825
- JP-A- 2009 096 290
- JP-A- 2010 228 504
- JP-U- S53 147 671
- JP-U- S61 104 909

## Description

The present invention relates to an assembly of a lamp unit to a vehicle tailgate or boot lid. The invention also relates to a method for assembling a lamp unit onto a vehicle tailgate or boot lid. The invention also relates to a vehicle including such an assembly and a vehicle wherein a lamp unit and a metal body part are assembled according to such a method.

Passenger vehicles such as cars and sports utility vehicles (SUVs) usually have a hinged tailgate at the rear of the vehicle that can be opened to provide access to the passenger compartment and/or to a luggage compartment. The tailgate may support a pair of lamp assemblies (known as rear "combi" lamps), each containing a cluster of lamps including, e.g. the tail lamps, direction indicators, brake lamps, fog lamps and/or reversing lamps. The lamp assemblies are usually mounted adjacent the outermost side edges of the tailgate. Additional lamp assemblies may be fitted to the rear wings (or fenders) of the vehicle.

It is common for the housing of a lamp assembly to be moulded from plastic with a reflective inner surface, and to include a coloured plastic lens in a sealed unit. The lamp assembly may be installed into a pressed metal recess that has been welded to the main vehicle metallic body, or to a tailgate, hatch, or other panel.

The lamp assembly housing generally has sufficient depth to enable a space within the housing to hold all of the lamp's internal structure. It is this depth, when mounted into a metal body part, which determines the body pressing radius around the periphery of the recess; i.e. the greater the depth of the housing to be accommodated, the greater the radius of the corners of the pressed recess must be, so that an adequately deep recess may be pressed without risk of tearing the metal.

In this context, the depth of the lamp cluster is the dimension from the visible outer surface thereof to the innermost surface, which is concealed within the vehicle bodywork. This dimension would generally be measured along, or parallel to, the length or longitudinal axis of the vehicle.

For stylistic reasons, it may be desirable to have a sharp corner (e.g. substantially less than 90 degrees internal angle) for an inboard side of the lens but, because a large radius must be present in the pressed metal to receive the lamp housing, the only way to achieve a sharp corner effect is for the lens plastic to extend substantially beyond the edge of the lamp housing to overhang the pressed metal corner. This results in a poor appearance, as the back panel metal is visible through the translucent coloured lens, giving an undesirable variety of aesthetic effects with different body paint colours. Furthermore, the unsupported portion of the lens is exposed to potential damage. The unsupported lens, due to the brittleness of the material, can be damaged with minimal force; and cannot be dimensionally controlled with sufficient accuracy for an optimal fit and finish. From a design perspective, this arrangement is unsatisfactory, because the lamp housing edge must be as close to the lens periphery as possible; so that light from within the lamp housing makes use of substantially the whole surface area of the lens.

JP 2000 251509 A discloses an assembly of a substantially rectangular front lamp to a vehicle valance 7 and wing 9, including a finisher 28 which surrounds the lamp on all sides. JP 2009 096290 A discloses an assembly of a tail light to a rear wing 6. A finisher element 20 is fitted to a rounded side of the tail light assembly. JP 2004 306825 A discloses an assembly of a tail light to a tailgate. Two types of finisher are disclosed; one surrounds the light on all sides, while the other leaves a significant gap between light and finisher above the light.

The present invention proposes an assembly of a lamp unit to a vehicle tailgate or boot lid, and a method of assembling the same that allows for incorporation in the design of a sharp corner at an inboard side of the lens, without the associated exposure to damage and/or incomplete use of its translucent surface for transmitting light from within the lamp housing.

In one broad aspect, the invention entails an assembly of a lamp unit to a vehicle metal body part, said body part being a tailgate or a boot lid, wherein said lamp unit comprises a lamp housing with a sharp corner and a lens, and said vehicle body part comprises a pressed metal recess at a side of the vehicle for receiving said lamp unit, at least one corner of said pressed metal recess having an oversized radius to accommodate the full depth of the lamp housing at the sharp corner, wherein the oversized radius is a corner radius to accommodate depth of draw of the pressed metal; and said assembly further includes a finisher element mounted with, against or adjacent the sharp corner to cover the oversized corner radius of the recess; characterized in that the oversized radius extends the recess toward the inboard side of the vehicle only, , i.e. towards the longitudinal centre line of the vehicle; and in that the lamp housing fits snugly with the recess so that the lens is continuous with the bodywork on all sides, except exposed opening, extending in the inboard direction only, defined by a gap formed between the lamp housing and an inner portion of recess towards the longitudinal centre line of the vehicle, necessary to accommodate the sharp corner, which opening is later covered by the finisher element.

According to the invention, the assembly provides a structure where the pressed recess of the metal body has a large enough radius to accommodate the full depth of the lamp housing, but also keeps the housing of the lamp close to the lens periphery, even though it will have a sharp corner.

This is achieved by utilising a lamp housing, sealed with a lens, wherein the lens periphery is smaller than the mating metal body pressed (recessed) area. In practice, the large radius required for the depth of press is hidden by a finisher element (or finisher panel) fitted adjacent to the lamp assembly. The finisher element may, for example, cover number plate lights, and may carry the vehicle maker or model name.

In an example, the lamp housing includes a flange that protrudes from an inner side wall thereof, and overlaps behind the finisher element. When assembled, this means that none of the metal body of the vehicle adjacent to the lamp assembly is visible in any tolerance condition. According to the invention, the vehicle has its required styling intention of having a sharp corner on one side of the rear lamp assembly, which may be an inboard side. Since there is no lens overhang or unsupported portion, the lamp assembly achieves a robust structure; and the functional components of the assembly are hidden from view. As existing parts are used for two purposes, there is no need for additional parts acting as covers.

In an example, the vehicle lamp housing includes a plurality of walls that form an open-sided lamp compartment for receiving one or more lamps; a lens having at least one sharp corner and sealed at its peripheral edges with the walls of the housing to close the lamp compartment; and a flange extending outwards from at least one of the walls of the lamp housing adjacent the sharp corner of the lens.

In further examples, the sharp corner on the lamp housing may subtend an angle of less than seventy, forty, or fifteen degrees; and may have a radius of less than fifteen, ten, or five millimetres.

According to a second aspect, the invention provides a method for assembling a lamp unit comprising a lamp housing with a sharp corner and a lens into a vehicle tailgate or boot lid including: providing a pressed recess in the metal of the vehicle tailgate or boot lid, wherein an oversized radius of a corner of the pressed recess corresponding to the sharp angled corner of the lamp housing is large enough to accommodate the full depth of the lamp housing into the pressed recess ,wherein the oversized radius is a corner radius to accommodate depth of draw of the pressed metal; installing a lamp housing into the pressed recess; and installing a finisher element onto the vehicle tailgate or boot lid, said finisher element being located against or adjacent to the sharp angled corner of the lamp housing, to cover the exposed corner radius of the pressed recess; characterized in that the oversized radius extends the recess toward the inboard side of the vehicle only, i.e. towards the longitudinal centre line of the vehicle; and in that the lamp housing fits snugly with the recess so that the lens is continuous with the bodywork on all sides, except the exposed opening, extending in the inboard direction only, defined by a gap formed between the lamp housing and an inner portion of recess towards the longitudinal centre line of the vehicle, necessary to accommodate the sharp corner, which opening is later covered by the finisher element.

A vehicle lamp assembly according to the present invention will be hereafter described by way of example only, with reference to the accompanying drawings wherein:-
**Figure 1** shows a schematic perspective view of a vehicle 1, showing its longitudinal axis X-X, its transverse axis Y-Y, and its vertical axis Z-Z;
Figure 2 illustrates an exploded view of the assembly of a vehicle lamp unit to a tailgate according to the invention;
Figure 3 illustrates an elevation view of a vehicle tailgate with the lamp unit installed;
Figures 4a and 4b illustrate the tailgate structure before and after a finisher element is installed; and
Figure 5 provides a sectional plan view of the assembled components according to the invention.

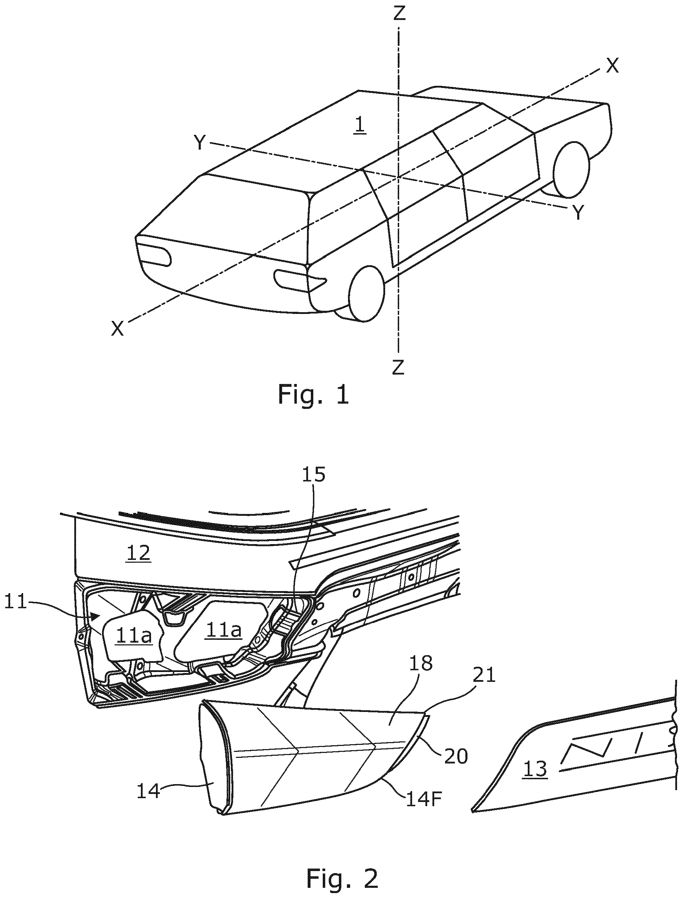

Referring to **Figure 2****,** the general components of a vehicle tailgate are shown wherein a pressed metal recess portion 11 is welded into place over an opening in the main metal body 12 of the vehicle 1. Further contours are pressed into the metal bodywork as is the usual practice, e.g. to receive additional components such as a finisher element 13. It is also common for a series of openings 11a to remain in the recess portion 11 so that the lamp housing can be accessed from inside the vehicle, e.g. for replacing light bulbs.

According to the invention, the pressed metal recess portion 11 is formed at its inboard side to be larger than it needs to be to accommodate the corresponding inboard side of a lamp housing 14. It is noteworthy that the "corner" 15 of the pressed metal recess 11 does not have a sharp edge (as it would not be possible to press such a shape into the metal using available manufacturing techniques), but has a curvature of such a size as to enable the required depth to be achieved. The provision of a corner radius to accommodate depth of draw is well known in the art of metal working.

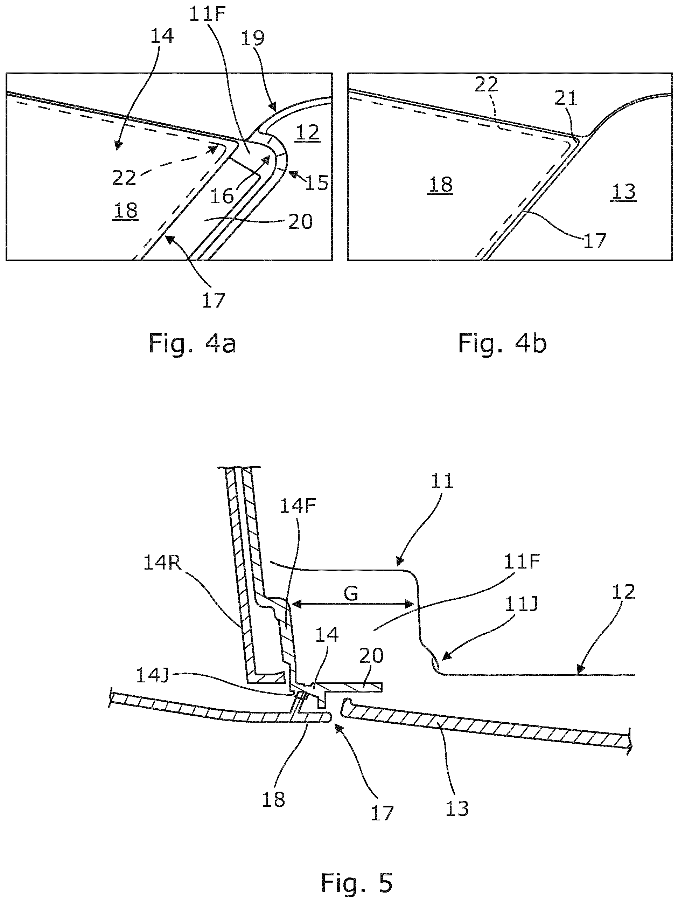

The curvature 16 of corner 15 is best illustrated by Figure 4a. **Figure 4a** also clearly shows the extent to which the recess 11 is intended to be larger than the inboard side 17 of the lamp housing 14.

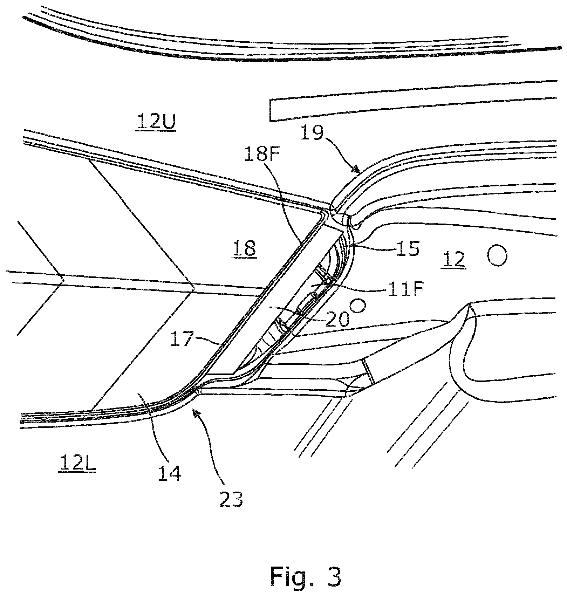

**Figure 3** generally illustrates the lamp housing 14 in place within recess 11, such that the lens 18 smoothly meets the bodywork 12 at the upper (12U) and lower (12L) edges, which may include corresponding curvatures and other features, according to functional and styling requirements. Particularly, the angled edge 17 of the lens 18 stylistically abuts an arch feature 19 pressed into the body work 12 of the tailgate.

The oversized nature of the recess 11 at its corner 15 is evident in Figure 3. In the illustrated embodiment, there is an open area 11F extending in the inboard direction only, towards the longitudinal centre line of the vehicle (X-X in Figure 1). Open area 11F extends substantially parallel to lens edge 17, and does not return to meet the housing 14 until adjacent the wide angled lower corner 23. However, any suitable shape of the open area 11F may be possible, so long as it accommodates all of the sharp angle of the housing/lens corner. For example, the corner radius 16 (Fig. 4a) may direct the inboard edge of recess 11 to curve quickly back toward the wall of housing 14 long before the lower corner 23 is reached.

In the illustrated and preferred embodiment of the invention, the lamp housing 14 generally fits snugly into the pressed recess 11, so that the lens 18 is close to and co-planar with the body work over most of its periphery, with only an exposed inboard side 18F to be subsequently hidden by the finisher element 13.

As illustrated, a flange 20 (Figs. 2 and 3) is provided to extend from an inner sidewall 14F of housing 14 (preferably located near to the join 14J with lens 18). This flange 20 substantially covers open area 11F, which results from the oversized inboard dimension of recess 11 in relation to the inboard side of housing 14. Preferably, flange 20 will be integrally moulded with the inner lamp housing wall 14F; and will be dark in colour to disguise the small remaining gap between the lamp assembly 14 and the finisher element 13 when the vehicle is fully assembled.

**Figure 4b** illustrates the rear vehicle/tailgate structure wherein the finisher element 13 visible in Figure 2 has been installed (usually by suitable fasteners or by a snap fit structure) to be closely adjacent to the installed lamp housing. It will be apparent that, in accordance with the purpose of the invention, the assembled structure is able to have a relatively sharp corner 21 on the lens, which is fully supported by the lamp housing to which it is sealed (indicated by the dashed lines 22). Furthermore, any gap between the finisher element 13 and the lens 18 is underlaid by the flange 20, which is shown exposed in Figure 4a.

**Figure 5** illustrates a plan sectional view of the assembled components, where it can be seen that edge 17 of lens 18 is supported by the sidewall structure 14F of lamp housing 14; and how flange 20 overlaps behind the finisher element 13, which is in turn affixed (not shown) to the vehicle bodywork 12. The oversized inboard dimension of recess 11 (welded to bodywork 12 at joint 11J) is clearly evident by the gap G formed between lamp housing 14 and the inner portion of recess 11. Numeral 14R denotes a reflector, mounted within lamp housing 14. It will be noted that housing 14 and lens 18 are shown overlapping each other in this Figure at joint 14J; this is because these two parts are welded together during assembly of the vehicle lamp unit.

In further embodiments of the invention, it may be possible to omit either the flange, or the separate finisher element, such that the open area caused by the oversized corner is covered by the other element. For example, the flange moulded integrally with the lamp housing may extend to become a finisher element in a direction towards the centre of the rear of the vehicle. Alternatively, the finisher element may extend to meet with the lamp housing; or may extend into a slot formed in the sidewall thereof. Either solution covers the exposed metal void (open area 11F) found near the sharp angle of the lens.

Although it is conventional for the pressed metal recess to be a part separate to the tailgate, not least because it can then be made from a steel particularly suited to deep pressing, the recess may be stamped into the tailgate itself.

The tailgate or rear lamp assembly according to the invention generally utilises available manufacturing capabilities and materials known in the art. However, it enables extreme styling features (e.g. sharp corners on a lens) to be incorporated without compromising the robustness of components.

## Claims

1. An assembly of a lamp unit to a vehicle metal body part (12), said metal body part (12) being a tailgate or a boot lid, wherein said lamp unit comprises a lamp housing (14) with a sharp corner (21) and a lens (18), and said vehicle body part (12) comprises a pressed metal recess (11) at a side of the vehicle (1) for receiving said lamp unit, at least one corner of said pressed metal recess (11) having an oversized radius (16) to accommodate the full depth of the lamp housing (14) at the sharp corner (21), wherein the oversized radius (16) is a corner radius to accommodate depth of draw of the pressed metal ; and said assembly further includes a finisher element (13) mounted with, against or adjacent the sharp corner (21) to cover the oversized corner radius (16) of the recess (11); **characterized in that**:
the oversized radius (16) extends the recess (11) toward the inboard side of the vehicle (1) only, i.e. towards the longitudinal centre line (X-X) of the vehicle; and **in that**:
the lamp housing (14) fits snugly with the recess (11) so that the lens (18) is continuous with the bodywork on all sides, except an exposed opening, extending in the inboard direction only, defined by a gap (G) formed between the lamp housing (14) and an inner portion of recess (11) towards the longitudinal centre line (X-X) of the vehicle, necessary to accommodate the sharp corner (21), which opening is later covered by the finisher element (13).

2. An assembly according to claim 1, wherein the lamp housing (14) includes a flange (20) extending from a side wall (14F) thereof adjacent the sharp corner (21) to overlap with the finisher element (13).

3. An assembly according to claim 1 or claim 2, wherein the lamp unit lens (18) is joined at its periphery (17) with the lamp housing (14), the joint extending up to the sharp corner (21).

4. An assembly according to claim 3, wherein the lamp lens (18) is substantially co-planar in the area of the sharp corner (21) with a surface (12U) of the body part (12) to which the lamp unit is assembled.

5. An assembly according to any of claims 1 to 4, wherein the lamp housing (14) includes:
a plurality of walls (14F) that form an open-sided lamp compartment for receiving one or more lamps;
a lens (18) having at least one sharp corner (21) and sealed at its peripheral edges (17) with the walls (14F) of the housing (14) to close the lamp compartment; and
a flange (20) extending outwards from at least one of the walls of the lamp housing adjacent the sharp corner of the lens.

6. An assembly according to any one of claims 1 to 5, wherein said recess (11) is a separate part, assembled to said body part (12).

7. An assembly according to any one of claims 1 to 6, wherein an angled edge (17) of the lens (18) of the lamp unit stylistically abuts an arch feature (19) pressed into the tailgate or boot lid (12).

8. An assembly according to any preceding claim, wherein said sharp corner (21) subtends an angle of less than seventy degrees.

9. An assembly according to any preceding claim, wherein said sharp corner (21) has a radius of less than fifteen millimetres.

10. A method for assembling a lamp unit comprising a lamp housing (14) with a sharp corner (21) and a lens (18) into a vehicle metal body part (12), said metal body part being a tailgate or a boot lid, said method including:
providing a pressed recess (11) in the metal of the vehicle body part, wherein an oversized radius (16) of a corner (15) of the pressed recess (11) corresponding to the sharp angled corner (21) of the lamp housing (14) is large enough to accommodate the full depth of the lamp housing (14) into the pressed recess (11); ,wherein the oversized radius (16) is a corner radius to accommodate depth of draw of the pressed metal;
installing a lamp housing (14) into the pressed recess (11); and
installing a finisher element (13) onto the vehicle metal body part (12), said finisher element (13) being located against or adjacent to the sharp angled corner (21) of the lamp housing (14), to cover the exposed corner radius (16) of the pressed recess (11);
**characterized in that**:
the oversized radius (16) extends the recess (11) toward the inboard side of the vehicle (1) only, i.e. towards the longitudinal centre line (X-X) of the vehicle;
and **in that**:
the lamp housing fits snugly with the recess so that the lens (18) is continuous with the bodywork on all sides, except the exposed opening, extending in the inboard direction only, defined by a gap (G) formed between the lamp housing (14) and an inner portion of recess (11) towards the longitudinal centre line (X-X) of the vehicle, necessary to accommodate the sharp corner (21), which opening is later covered by the finisher element (13).

11. The method of claim 10, wherein the lamp housing (14) is provided with a flange (20) adjacent to the sharp angled corner (21) to overlap with the finisher element (13) .

12. A vehicle (1) incorporating an assembly according to any one of claims 1 to 9.

13. A vehicle (1) comprising a lamp unit and a metal body part (12), said metal body part being a tailgate or boot lid, the lamp unit and the metal body part (12) being assembled according to the method of claim 10 or claim 11.

## Patentansprüche

1. Anordnung einer Lampeneinheit an einem metallischen Karosserieteil (12) eines Fahrzeugs, wobei das metallische Karosserieteil (12) eine Heckklappe oder ein Kofferraumdeckel ist, wobei die Lampeneinheit ein Lampengehäuse (14) mit einer spitzen Ecke (21) und einer Linse (18) umfasst und das Karosserieteil (12) des Fahrzeugs eine gepresste Metallaussparung (11) an einer Seite des Fahrzeugs (1) zur Aufnahme der Lampeneinheit umfasst, wobei mindestens eine Ecke der Aussparung (11) aus gepresstem Metall einen übergroßen Radius (16) aufweist, um die volle Tiefe des Lampengehäuses (14) an der spitzen Ecke (21) aufzunehmen, wobei der übergroße Radius (16) ein Eckenradius ist, um die Ziehtiefe des gepressten Metalls aufzunehmen; und
wobei die Anordnung ferner ein Abschlusselement (13) beinhaltet, das mit der spitzen Ecke (21) oder gegen oder angrenzend an die spitze Ecke (21) montiert ist, um den übergroßen Eckenradius (16) der Aussparung (11) abzudecken;
**dadurch gekennzeichnet, dass**:
der übergroße Radius (16) die Aussparung (11) nur in Richtung der Innenseite des Fahrzeugs (1) erstreckt, also in Richtung der Längsmittellinie (X-X) des Fahrzeugs;
und dadurch, dass:
das Lampengehäuse (14) sich eng an die Aussparung (11) anschmiegt, so dass die Linse (18) auf allen Seiten durchgehend ist mit der Karosserie, mit Ausnahme einer freiliegenden Öffnung, die sich nur in Richtung der Innenseite erstreckt und durch einen Spalt (G) definiert wird, der zwischen dem Lampengehäuse (14) und einem inneren Abschnitt der Aussparung (11) zur Längsmittellinie (X-X) des Fahrzeugs hin gebildet wird und notwendig ist, um die spitze Ecke (21) aufzunehmen, wobei die Öffnung später durch das Abschlusselement (13) abgedeckt wird.

2. Anordnung nach Anspruch 1, wobei das Lampengehäuse (14) einen Flansch (20) beinhaltet, der sich von einer Seitenwand (14F) desselben angrenzend an die spitze Ecke (21) erstreckt, um mit dem Abschlusselement (13) zu überlappen.

3. Anordnung nach Anspruch 1 oder 2, bei der die Linse (18) der Lampeneinheit an ihrem Umfang (17) mit dem Lampengehäuse (14) verbunden ist, wobei sich die Verbindung bis zur spitzen Ecke (21) erstreckt.

4. Anordnung nach Anspruch 3, wobei die Lampenlinse (18) im Bereich der spitzen Ecke (21) im Wesentlichen koplanar mit einer Oberfläche (12U) des Karosserieteils (12) ist, an dem die Lampeneinheit montiert ist.

5. Anordnung nach einem der Ansprüche 1 bis 4, wobei das Lampengehäuse (14) beinhaltet:
eine Vielzahl von Wänden (14F), die einen seitlich offenen Lampenraum zur Aufnahme einer oder mehrerer Lampen bilden;
eine Linse (18) mit mindestens einer spitzen Ecke (21), die an ihren Umfangskanten (17) mit den Wänden (14F) des Gehäuses (14) abgedichtet ist, um den Lampenraum zu schließen; und
einen Flansch (20), der sich von mindestens einer der Wände des Lampengehäuses angrenzend an die spitze Ecke der Linse nach außen erstreckt.

6. Anordnung nach einem der Ansprüche 1 bis 5, wobei die Aussparung (11) ein separates Teil ist, das mit dem Karosserieteil (12) zusammengebaut ist.

7. Anordnung nach einem der Ansprüche 1 bis 6, bei der eine abgewinkelte Kante (17) der Linse (18) der Lampeneinheit als stilistisches Element an ein in die Heckklappe oder den Kofferraumdeckel (12) eingepresstes Bogenelement (19) anstößt.

8. Anordnung nach einem der vorhergehenden Ansprüche, bei der die spitze Ecke (21) einen Winkel von weniger als siebzig Grad schneidet.

9. Anordnung nach einem der vorhergehenden Ansprüche, bei der die spitze Ecke (21) einen Radius von weniger als fünfzehn Millimetern aufweist.

10. Verfahren zum Zusammenbau einer Lampeneinheit, umfassend ein Lampengehäuse (14) mit einer spitzen Ecke (21) und einer Linse (18) in einem Karosserieteil (12) eines Fahrzeugs, wobei das metallische Karosserieteil eine Heckklappe oder ein Kofferraumdeckel ist, wobei das Verfahren beinhaltet:
Bereitstellen einer gepressten Aussparung (11) in dem Metall des Karosserieteils des Fahrzeugs, wobei ein übergroßer Radius (16) einer Ecke (15) der gepressten Aussparung (11) der scharfkantigen Ecke (21) des Lampengehäuses (14) groß genug ist, um die volle Tiefe des Lampengehäuses (14) in der gepressten Aussparung (11) aufzunehmen; wobei der übergroße Radius (16) ein Eckradius ist, um die Zugtiefe des gepressten Metalls aufzunehmen;
Installieren eines Lampengehäuses (14) in der gepressten Aussparung (11); und
Installieren eines Abschlusselements (13) auf dem metallischen Karosserieteil (12) des Fahrzeugs, wobei das Abschlusselement (13) an der spitzen Ecke (21) oder angrenzend an die spitze Ecke (21) des Lampengehäuses (14) angeordnet ist, um den freiliegenden Eckenradius (16) der gepressten Aussparung (11) abzudecken;
**dadurch gekennzeichnet, dass**:
der übergroße Radius (16) die Aussparung (11) nur in Richtung der Innenseite des Fahrzeugs (1) erstreckt, also in Richtung der Längsmittellinie (X-X) des Fahrzeugs;
und dadurch, dass:
das Lampengehäuse sich eng an die Aussparung anschmiegt, so dass die Linse (18) auf allen Seiten durchgehend ist mit der Karosserie, mit Ausnahme einer freiliegenden Öffnung, die sich nur in Richtung der Innenseite erstreckt und durch einen Spalt (G) definiert wird, der zwischen dem Lampengehäuse (14) und einem inneren Abschnitt der Aussparung (11) zur Längsmittellinie (X-X) des Fahrzeugs hin gebildet wird und notwendig ist, um die spitze Ecke (21) aufzunehmen, wobei die Öffnung später durch das Abschlusselement (13) abgedeckt wird.

11. Verfahren nach Anspruch 10, wobei das Lampengehäuse (14) mit einem Flansch (20) versehen ist, der an die spitzwinklige Ecke (21) angrenzt, um mit dem Abschlusselement (13) zu überlappen.

12. Fahrzeug (1), das eine Anordnung nach einem der Ansprüche 1 bis 9 enthält.

13. Fahrzeug (1), umfassend eine Lampeneinheit und ein metallisches Karosserieteil (12), wobei das metallische Karosserieteil eine Heckklappe oder ein Kofferraumdeckel ist, wobei die Lampeneinheit und das metallische Karosserieteil (12) nach dem Verfahren nach Anspruch 10 oder 11 zusammengebaut sind.

## Revendications

1. Ensemble d'une unité de phare pour une partie de carrosserie métallique de véhicule (12), ladite partie de carrosserie métallique (12) étant un hayon ou un couvercle de coffre, dans lequel ladite unité de phare comprend un boîtier de phare (14) ayant un coin pointu (21) et une lentille (18), et ladite partie de carrosserie de véhicule (12) comprend un évidement métallique pressé (11) sur un côté du véhicule (1) destiné à recevoir ladite unité de phare, au moins un coin dudit évidement métallique pressé (11) ayant un rayon surdimensionné (16) destiné à recevoir la pleine profondeur du boîtier de phare (14) au niveau du coin pointu (21), dans lequel le rayon surdimensionné (16) est un rayon de coin destiné à s'adapter à la profondeur d'étirage du métal pressé ; et
ledit ensemble comprend en outre un élément de finition (13) monté avec, contre ou de manière adjacente au coin pointu (21) pour couvrir le rayon de coin surdimensionné (16) de l'évidement (11) ;
**caractérisé en ce que** :
le rayon surdimensionné (16) prolonge l'évidement (11) vers le côté intérieur du véhicule (1) uniquement, c'est-à-dire vers la ligne médiane longitudinale (XX) du véhicule ;
et **en ce que** :
le boîtier de phare (14) s'adapte parfaitement à l'évidement (11) de sorte que la lentille (18) est continue avec la carrosserie sur tous les côtés, à l'exception d'une ouverture exposée, s'étendant uniquement dans la direction intérieure, définie par un espace (G) formé entre le boîtier de phare (14) et une partie intérieure de l'évidement (11) vers la ligne médiane longitudinale (XX) du véhicule, nécessaire pour loger le coin pointu (21), laquelle ouverture est ensuite recouverte par l'élément de finition (13).

2. Ensemble selon la revendication 1, dans lequel le boîtier de phare (14) comprend une bride (20) s'étendant depuis une paroi latérale (14F) de celui-ci de façon adjacente au coin pointu (21) pour chevaucher l'élément de finition (13).

3. Ensemble selon la revendication 1 ou 2, dans lequel la lentille d'unité de phare (18) est jointe à sa périphérie (17) avec le boîtier de phare (14), l'articulation s'étendant jusqu'au coin pointu (21).

4. Ensemble selon la revendication 3, dans lequel la lentille de phare (18) est sensiblement coplanaire dans la zone du coin pointu (21) avec une surface (12U) de la partie de corps (12) à laquelle l'unité de phare est assemblée.

5. Ensemble selon l'une quelconque des revendications 1 à 4, dans lequel le boîtier de phare (14) comprend :
une pluralité de parois (14F) qui forment un compartiment de phare à côté ouvert destiné à recevoir un ou plusieurs phares ;
une lentille (18) ayant au moins un coin pointu (21) et scellée à ses bords périphériques (17) avec les parois (14F) du boîtier (14) pour fermer le compartiment du phare ; et
une bride (20) s'étendant vers l'extérieur depuis au moins l'une des parois du boîtier de phare adjacentes au coin pointu de la lentille.

6. Ensemble selon l'une quelconque des revendications 1 à 5, dans lequel ledit évidement (11) est une pièce séparée, assemblée à ladite partie de carrosserie (12).

7. Ensemble selon l'une quelconque des revendications 1 à 6, dans lequel un bord incliné (17) de la lentille (18) de l'unité de phare vient en butée stylistiquement sur un élément d'arche (19) pressé dans le hayon ou le couvercle de coffre (12).

8. Ensemble selon l'une quelconque des revendications précédentes, dans lequel ledit coin pointu (21) sous-tend un angle inférieur à soixante-dix degrés.

9. Ensemble selon l'une quelconque des revendications précédentes, dans lequel ledit coin pointu (21) a un rayon de moins de quinze millimètres.

10. Procédé d'assemblage d'une unité de phare comprenant un boîtier de phare (14) avec un coin pointu (21) et une lentille (18) dans une partie de carrosserie métallique de véhicule (12), ladite partie de carrosserie métallique étant un hayon ou un couvercle de coffre, ledit procédé comprenant :
la fourniture d'un évidement pressé (11) dans le métal de la partie de carrosserie de véhicule, dans lequel un rayon surdimensionné (16) d'un coin (15) de l'évidement pressé (11) correspondant au coin à angle pointu (21) du boîtier de phare (14) est suffisamment grand pour recevoir toute la profondeur du boîtier de phare (14) dans l'évidement pressé (11) ; dans lequel le rayon surdimensionné (16) est un rayon de coin destiné à s'adapter à la profondeur d'étirage du métal pressé ;
l'installation d'un boîtier de phare (14) dans l'évidement pressé (11) ; et
l'installation d'un élément de finition (13) sur la partie de carrosserie métallique du véhicule (12), ledit élément de finition (13) étant situé contre ou de manière adjacente au coin à angle pointu (21) du boîtier de phare (14), pour couvrir le rayon de coin exposé (16) de l'évidement pressé (11) ;
**caractérisé en ce que** :
le rayon surdimensionné (16) prolonge l'évidement (11) vers le côté intérieur du véhicule (1) uniquement, c'est-à-dire vers la ligne médiane longitudinale (XX) du véhicule ;
et **en ce que** :
le boîtier de phare s'adapte parfaitement à l'évidement de sorte que la lentille (18) est continue avec la carrosserie sur tous les côtés, à l'exception de l'ouverture exposée, s'étendant uniquement dans la direction intérieure, définie par un espace (G) formé entre le boîtier de phare (14) et une partie intérieure de l'évidement (11) vers la ligne médiane longitudinale (X-X) du véhicule, nécessaire pour loger le coin pointu (21), laquelle ouverture est ensuite recouverte par l'élément de finition (13).

11. Procédé selon la revendication 10, dans lequel le boîtier de phare (14) est pourvu d'une bride (20) adjacente au coin à angle pointu (21) pour chevaucher l'élément de finition (13).

12. Véhicule (1) incorporant un ensemble selon l'une quelconque des revendications 1 à 9.

13. Véhicule (1) comprenant une unité de phare et une partie de carrosserie métallique (12), ladite partie de carrosserie métallique étant un hayon ou un couvercle de coffre, l'unité d'éclairage et la partie de carrosserie métallique (12) étant assemblées selon le procédé de la revendication 10 ou 11.
